**Europäisches Patentamt**

**European Patent Office**

**Office européen des brevets**

(19)

(11) Veröffentlichungsnummer: **0 118 515**
**B1**

(12)

# EUROPÄISCHE PATENTSCHRIFT

(45) Veröffentlichungstag der Patentschrift:
**12.03.86**

(21) Anmeldenummer: **83902881.8**

(22) Anmeldetag: **19.09.83**

(86) Internationale Anmeldenummer:
**PCT/AT 83/00028**

(87) Internationale Veröffentlichungsnummer:
**WO 84/01099 (29.03.84 Gazette 84/9)**

(51) Int. Cl.⁴: **A 61 C 1/14**

(54) **WINKELSTÜCK FÜR ZAHNÄRZTLICHE ZWECKE.**

(30) Priorität: **21.09.82 AT 3509/82**

(43) Veröffentlichungstag der Anmeldung:
**19.09.84 Patentblatt 84/38**

(45) Bekanntmachung des Hinweises auf die Patenterteilung:
**12.03.86 Patentblatt 86/11**

(84) Benannte Vertragsstaaten:
**CH DE FR LI**

(56) Entgegenhaltungen:
**EP - A - 0 026 079**
**CH - A - 416 935**
**DE - C - 466 389**
**FR - A - 910 240**
**US - A - 2 010 421**

(73) Patentinhaber: **DENTALWERK BÜRMOOS GESELLSCHAFT M.B.H., Ignaz Glaser-Strasse 53, A-5111 Bürmoos (AT)**

(72) Erfinder: **ROSENSTATTER, Otto, Matzing 105, A-5164 Seeham (AT)**

(74) Vertreter: **Barger, Erich et al, Patentanwälte Dipl.-Ing. Erich Barger Dipl.-Ing. Hermann Krick Biberstrasse 15, A-1010 Wien (AT)**

ACTORUM AG

## Beschreibung

Die Erfindung bezieht sich auf ein Winkelstück für zahnärztliche Zwecke mit einem im Kopfteil quer zur Antriebsachse gelagerten und mit seinem Antriebszahnrad fest verbundenen und gemeinsam mit diesem austauschbaren Werkzeug mit zylindrischem Werkzeugschaft. Weiters bezieht sich die Erfindung auf eine Vorrichtung zur Arretierung dieser Baugruppe insbesondere unter der Voraussetzung, dass der Winkelkopf ohne vorspringende Partien integrierter Bestandteil des zylindrischen Kopfschaftes ist.

Bei einem bekannten Winkelstück dieser Art nach US-A Nr. 4268252 ist eine Ausbildung des Winkelkopfes beschrieben, wonach der Winkelkopf den Abschluss des zylindrischen Kopfschaftes bildet und dessen Kreisquerschnitt nicht überragt. Eine stufenförmige Querbohrung des Kopfschaftes bildet die Lagerflächen für das Bohrwerkzeug, welches aus dem Werkzeugschaft und dem auf diesem befestigten Antriebszahnrad besteht. Die werkzeugseitige Stirnfläche des Zahnrades bildet eine kugelförmige Kuppe mit einem Krümmungsradius gleich dem Radius des Kopfschaftes und schliesst bei eingesetztem Werkzeug mit der Mantelfläche des Kopfschaftes bündig ab. Eine zylindrische Hülse übergreift den Kopfschaft und die Partie des Winkelkopfes, kann auf dem Schaft entweder gedreht oder achsial verschoben werden und ist mit Durchtrittsöffnungen versehen, die wahlweise gemäss den dargestellten Details entweder die Querbohrung des Kopfschaftes freigeben oder teilweise abdecken, um die Einführung bzw. die Halterung des Werkzeuges in Arbeitsstellung zu ermöglichen. Diese Ausführung eines Winkelstückkopfes bietet zwar die Möglichkeit sehr kleiner Bauweise ohne vorspringende Partien des Kopfes, ist aber auch mit Nachteilen behaftet. So ist durch die Tatsache, dass die Lagerung des mit dem Werkzeugschaft verbundenen Abtriebszahnrades in der Querbohrung des Winkelstückschaftes erfolgt, der Durchmesser des werkzeugseitigen Lagers an den grössten Durchmesser des Zahnrades gebunden, um den Trieb aus dem Kopf herausnehmen zu können. Diese Lagerstelle wird daher bei Betrieb mit den heute üblichen hohen Drehzahlen stark erwärmt und ausserdem nach Abnützung zur Folge haben, dass bei notwendigem Ersatz der ganze Kopfschaft ausgewechselt werden muss, was kostspielige Reparatur bedeutet. Weiters ist nachteilig, dass der Zahnradkörper frontal gegen das Werkzeug keine ausreichende Planlagerung hat, da seine kugelige Stirnfläche bestenfalls nur an zwei Stellen Linienberührung gegen die Wandung der Arretierhülse hat und an dieser Stelle rascher Verschleiss erfolgen wird. Ein weiterer Nachteil ist darin zu sehen, dass der für den Durchtritt des Werkzeugschaftes in der Arretierhülse vorgesehene Längs- oder Querschlitz die Stirnlagerfläche des Zahnradtriebes unterbricht, wobei die Kanten des Schlitzes gegen die rotierende Stirnfläche des Zahnrades wie Abstreifer wirken und den höchst unerwünschten Austritt von Schmiermittel in Richtung des Werkzeuges verursachen. Schliesslich ist zu erwähnen, dass die den Kopfschaft umgreifende Arretierhülse für den Werkzeugwechsel von Hand verdreht oder achsial verschoben werden muss und dass die Handhabung dieser dünnen, glatten Hülse bei den kleinen Dimensionen der angegebenen Bauart sehr beschwerlich sein kann, insbesondere deswegen, weil diese Hülse in ihrer Arbeitsstellung durch Friktion festgelegt sein muss, um sich nicht unbeabsichtigt lösen zu können, und weil überdies der als Handhabe dienende Aussenmantel dieser Hülse im praktischen Einsatz von Speichel benetzt wird, was den manuellen Zugriff erschwert. Dieser Mangel wird besonders deutlich, wenn man erwähnt, dass die Arretierhülse eines derartigen Winkelstückes einen Aussendurchmesser von höchstens 6 mm hat, also wesentlich dünner als ein Bleistift ist.

Die vorliegende Erfindung hat sich zur Aufgabe gestellt, die Nachteile der bekannten Winkelstücke hinsichtlich der Lagerung und des Wechsels der Bohrwerkzeuge sowie deren Arretiervorrichtung zu vermeiden, ohne die Möglichkeiten einzuschränken, ein derartiges Winkelstück sowohl mit zylindrisch glatter Kopfform als auch in Miniaturbauweise herstellen zu können. Erfindungsgemäss wird dies dadurch erreicht, dass ein in den Kopfteil formschlüssig einsetzbares werkzeugseitiges Kopflager mit dem Werkzeug drehbeweglich und unverlierbar verbunden ist und dass eine auf dem Kopfschaft axial verschiebbare, äussere Schraubhülse das Kopflager in dessen eingesetzter Lage teilweise übergreift. Das mit dem Werkzeugschaft kombinierte Kopflager ist dabei mit seiner Lagerbohrung auf einem Halsfortsatz des dahinter liegenden, mit dem Werkzeugschaft fest verbundenen Abtriebszahnrades drehbeweglich gelagert und durch einen Schulterring in Stellung gehalten, der werkzeugseitig gegen den Lagerzylinder des Zahnrades gepresst wird und im Durchmesser diesen Zylinder und damit auch die Lagerbohrung des Kopflagers übergreift. Um das Lager des Werkzeugschaftes in der zugeordneten Ausnehmung des Winkelstückkopfes sowohl achsial als auch radial in Betriebsstellung befestigen zu können, ist in Ausgestaltung der Erfindung die auf dem Kopfschaft drehbeweglich gelagerte, schraubbare Hülse an ihrer dem Werkzeug zugekehrten Mündung mit einem Innenkegel versehen, der gegen einen auf dem Werkzeuglage angebrachten, korrespondierenden Aussenkegelabschnitt zur Anlage gebracht und verschraubt werden kann, wobei die Wirkung der Kegelflächen den Lagerkörper sowohl achsial als auch radial in dessen Aufnahme presst. Um die erforderlichen Schraubkräfte mühelos aufbringen zu können, wird erfindungsgemäss vorgeschlagen, das im Durchmesser verstärkte, an die Griffpartie des Winkelstückes angrenzende Ende der schraubbaren Hülse als längsgerillten Drehgriff auszubilden, der vorzugsweise als langgestreckter Kegel den Übergang von der Griffpartie zum wesentlich kleineren zylindrischen Abschnitt des Winkelkopfes bildet. Es wird weiter vorgeschlagen, den auf das Werkzeuglager einwirkenden, zylindrischen Teil der schraubbaren Hülse und den darüber hinaus- ragenden Winkelkopf mit gleichem Aussendurch- messer auszubilden, was an Hand der Zeichnungen beschrieben ist.

Die Erfindung wird an Hand der Zeichnung näher erläutert; diese stellt dar:

Fig. 1 einen Längsschnitt durch ein Winkelstück bis zum gewinkelten Übergang zur Griffpartie desselben;

Fig. 2 einen Winkelstückkopf gemäss Fig. 1 in perspektivischer Ansicht, mit herausgenommenem Werkzeugteil;

Fig. 3 einen Winkelstückkopf gemäss Fig. 1, mit eingesetztem Werkzeugteil und zylindrischem Frontlager, im Schnitt;

Fig. 4 einen Winkelstückkopf wie Fig. 3, jedoch mit Frontlager in Form eines halbrunden Kopfsegmentes;

Fig. 5 einen Winkelstückkopf gemäss Fig. 4 in perspektivischer Ansicht mit herausgenommenem Werkzeugteil.

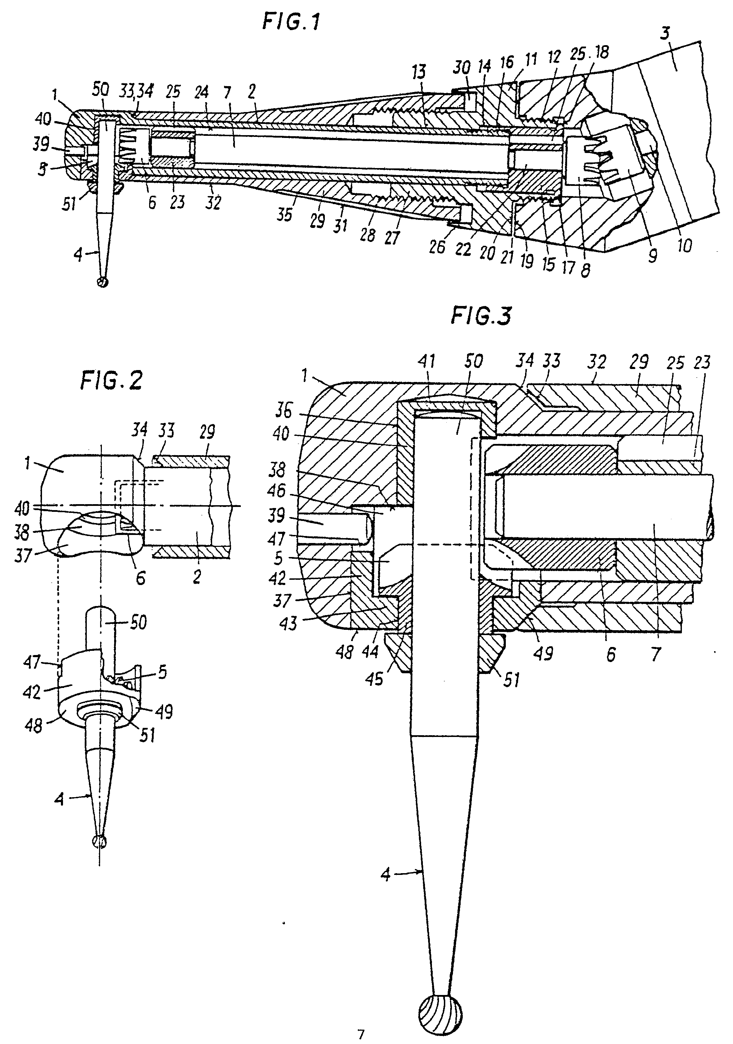

Im Kopf 1 eines Winkelstückes gemäss Fig. 1, der über einen langgestreckten zylindrischen Schaft 2 mit dem Griffteil 3 in Verbindung steht, ist das Bohrwerkzeug 4 drehbeweglich gelagert und wird von einem Zahnradpaar 5, 6 angetrieben, welches seinerseits über eine den Kopfschaft durchsetzende Welle 7 und ein dieser vorgelager- tes Zahnradpaar 8, 9 von der Hauptachse 10 angetrieben wird. Griffpartie 3 und Hauptachse 10 wer- den in allgemein bekannter Weise mit motorischen Antrieben verbunden, in der Regel mittels lösbarer Steckkupplungen.

Die Verbindung zwischen dem Kopfschaft 2 und dem gewinkelten Griffteil 3 wird durch eine Gewindebüchse 11 hergestellt, die mittels eines Gewindeansatzes 12 in den Griffteil 3 eingeschraubt wird und in einer durchgehenden Stufenbohrung 13, 14 den Kopfschaft 2 und dessen griffseitiges Lager 15 aufnimmt, welches über ein Gewinde 16 mit dem Kopfschaft verschraubt ist und mit einem Flansch 17 den Gewindehals 12 der Büchse 11 übergreift. Der Flansch 17 wird zwischen Gewindehals 12 und Ringstufe 18 des Griffteiles 3 festgeklemmt, wozu bei Verschraubung der Teile 3 und 11 zwischen deren benachbarten Stirnflächen 19 und 20 ein geringfügiger Luftspalt 21 vorgesehen ist. Somit wird bei Verschraubung der Teile 3 und 11 der Kopfschaft 2 in seiner Stellung zur gewinkelten Griffpartie 3 festgelegt, wobei die Möglichkeit besteht, vor dem Verschrauben der Teile 3, 11 die Lage der Werkzeugachse des Winkelkopfes 1 zur Winkelungsebene des Griffteiles 3 beliebig zu wählen, da Kopfschaft 2 und Lagerkörper 15 in der Stufenbohrung 13, 14 der Gewindebüchse 11 mit enger Gleitpassung drehbar gelagert sind. Die achsiale Positionierung der Welle 7 ist dadurch gegeben, dass diese Welle am Eintritt in das hintere Lager 15 auf kleineren Durchmesser abgesetzt ist und mit der dadurch gebildeten Ringschuler gegen das Lager abgestützt und durch das auf dem Wellenfortsatz 22 montierte Triebrad 8 in dieser Stellung gehalten wird. Das kopfseitige Lager 23 ist in gleicher Weise auf der Welle montiert, jedoch mit dem Kopfschaft 2 nicht fest verbunden, sondern in dessen Bohrung 24 verschiebbar gelagert. Die Lager 15 und 23 sind mit achsialen Durchgängen 25 versehen, die dem Durchtritt von Öl dienen, welches bei Nach- schmierung dieser und aller übrigen Lagerstellen nach gängiger Übung aus Sprayflaschen in den Griffteil derartiger Winkelhandstücke eingesprüht wird.

Die Gewindehülse 11 bildet mit einem kegeligen Abschnitt 26 die Fortsetzung des Griffteiles 3 und endet kopfseitig in einem Gewindefortsatz 27, der schraubbar in das Hohlgewinde 28 einer drehbeweglichen, auf dem Kopfschaft 2 gelagerten Hülse 29 eingreift. Diese Hülse bildet den Übergang vom Winkelkopf 1 zur kegeligen Fasson der Gewindebüchse 11, greift in eine Ringnut 30 der Gewindebüchse 11 ein, geht mit einem kegeligen Abschnitt 31 in einen zylindrischen Teil 32 über, der von gleichem Durchmesser ist wie der Kopf 1 und dessen Bohrmündung mit einem Innenkegel 33 gegen die ebenfalls kegelförmige Ringstufe 34 am Übergang zwischen Kopfschaft 2 und Kopf 1 zur Anlage gebracht werden kann. Die Hülse 29 ist auf dem Kegelmantel 31 mit Griffrillen 35 versehen, die es ermöglichen, sie von Hand schraubend drehen und gegen den Kopf festziehen zu können. Die Tiefe der Ringnut 30 ist so bemessen, dass die Hülse 29 so weit vom Kopf 1 weggeschraubt werden kann, bis der Kegelansatz 34 des Kopfes freigelegt ist, wie in Fig. 2 dargestellt.

Im Kopf 1 ist quer zur Antriebsachse eine Stufenbohrung angeordnet, die aus einem Sackloch 36 und einer grösseren Bohrung 37 zusammengesetzt ist, wobei sich die Bohrung 37 in Richtung des Werkzeuges erstreckt und in Kopfmitte über eine Planfläche 38 in die Bohrung 36 übergeht. Beide Bohrungen stehen mit der Antriebsbohrung in Verbindung, um den Zahneingriff der Triebräder 5, 6 zu gestatten. Nahe der Planfläche 38 ist quer zur Bohrung 37 und gegenüber dem Zahnrad 6 ein Stift 39 im Kopf befestigt und ragt in die Bohrung 37. In der Sackbohrung 36 ist ein Gleitlager 40 befestigt, dessen Innendurchmesser dem Schaftdurchmesser des Bohrers angepasst ist und am Grund der Bohrung durch eine Wandung 41 zur achsialen Abstützung des Bohrerschaftes abgeschlossen wird. Ein topfförmiges Lager 42 von zylindrischer Grundform ist lösbar in der Bohrung 37 gehalten, schlägt an der Stufenfläche 38 an und schliesst mit dem Aussendurchmesser des Kopfes 1 ab. Ein Innenbund 43 dieses Lagers bildet den werkzeugseitigen Abschluss des Winkelstückkopfes und zugleich das Frontlager desselben, indem seine Durchgangsbohrung 44 einen Zylinderhals 45 des Kopftriebes 5 drehbeweglich aufnimmt und den Trieb 5 auch achsial abstützt. Der Hohlraum 46 des Lagerkörpers 42 ist durch zylindrische Ausdrehungen gebildet, die etwas grösser sind als die Durchmesser der in den Lagerkörper vorspringenden Zahnräder 5, 6. Ein Schlitz 47 durchsetzt die hülsenförmige Wandung des Lagers 42 und ist mit dem Stift 39 in Eingriff gebracht, um das Lager gegen Verdrehung zu sichern bzw. um dieses Lager grundsätzlich nur in ein und derselben Stellung in den Kopf einsetzen zu können. Um das Lager 42 in Position zu halten, ist auf dessen Stirnfläche 48 eine kegelige Fase 49 angeordnet, deren Mantelfläche mit dem Hohlkegel 33 der Hülse 29 korrespondiert und bezüglich der Bohrerachse in Richtung der Hülse 29 geringfügig über den Kegelansatz 34 des Kopfes vorspringt, und gegen die Fase 49 kann nun die Hülse 29 geschraubt werden. Die Kraftwirkung über die Kegel 33, 49 hat zur Folge, dass der Lager sowohl achsial als auch radial in Stellung gehalten wird, dass der Kraftschluss zufolge der Kegelwirkung gut gegen selbsttätiges Lösen gesichert ist und dass das Lager bei Festziehen und Lösen der Verschraubung infolge der Halterung durch den Stift 39 nicht aus seiner Stellung verdreht werden kann.

Das Bohrwerkzeug 4 ist mit dem Kopftrieb 5 fest verbunden, wobei der zylindrische Schaft 50 des Werkzeuges an seinem Ende den Trieb überragt und in Betriebsstellung im Lager 40 des Kopfes drehbar gelagert ist. Weiters ist das Frontlager 42 durch einen auf dem Werkzeugschaft 50 befestigten Ring 51 drehbeweglich auf dem Halsfortsatz 45 des Triebrades 5 gehalten, indem der Ring 51 den Hals des Triebrades übergreift und das Abfallen des Lagers vom Triebrad verhindert. Auf diese Weise sind Werkzeugschaft 50, Triebrad 5, Frontlager 42 und Ring 51 zu einer Baueinheit verbunden, die nur als Ganzes in den Kopf 1 eingesetzt und gewechselt werden kann und deren Arretierung durch die Klemmwirkung der Schraubhülse 29 erfolgt, wie bereits beschrieben. Es ist dabei besonders vorteilhaft, dass die Schraubhülse 29 an ihrem Ende verstärkt ausgebildet und mit Griffrillen versehen ist, weil dadurch die Manipulation für den Werkzeugwechsel vom eigentlichen Winkelkopf in Richtung des Griffstückes abgerückt und dort mit der nötigen Griffsicherheit bequemer durchzuführen ist als bisher bekannt.

Die beschriebene Baueinheit des Bohrwerkzeuges 4 ist in Fig. 2 vor der Mündung des Winkelkopfes 1 dargestellt und alle beschriebenen Bauteile dort ersichtlich. In dieser Abbildung ist die Schraubhülse 29 in jener vom Kopf 1 und dessen Kegelfläche 34 abgerückten Stellung gezeichnet, welche die Kopfbohrung 37 zwecks Einführung des Werkzeuges und dessen Lagers 42 genügend freigibt.

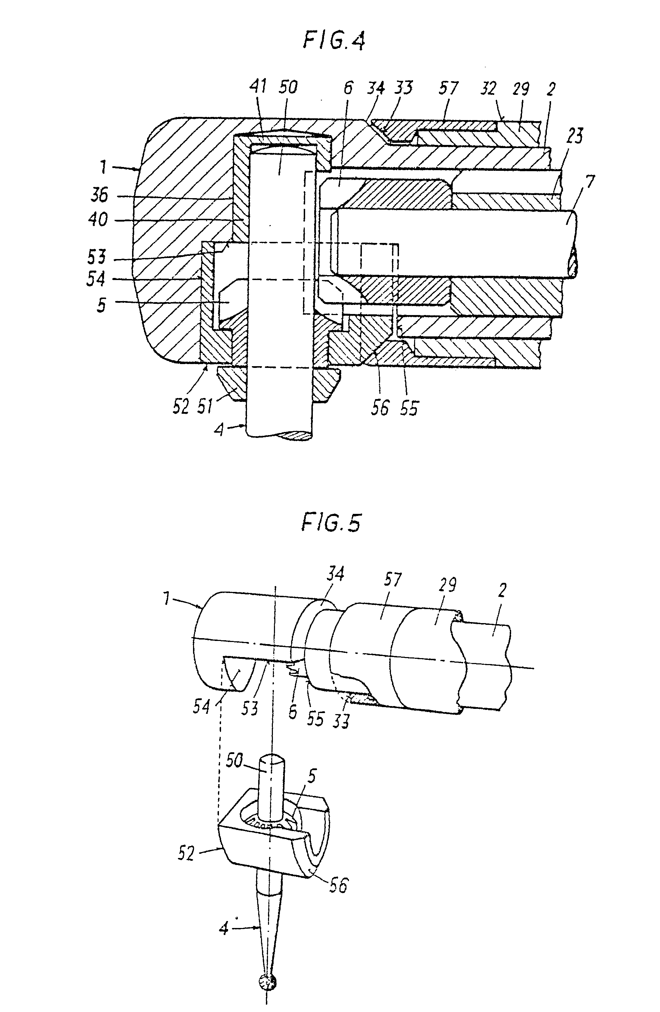

Das Frontlager 42 muss nicht unbedingt zylindrische Grundform haben, wie bisher beschrieben. Insbesondere dann, wenn der Winkelkopf von besonders kleiner Dimension ist, wie es für die Behandlung von Kindern gefordert wird, oder auch in anderen Fällen extrem schwer zugänglicher Partien der menschlichen Kiefer wünschenswert erscheint, sowie im Hinblick darauf, dass das Lager in seinem äusseren Durchmesser stets kleiner sein muss als der Kopfdurchmesser, erscheint es zweckmässig, dieses Lager zu verstärken und kompakter auszubilden, als es die zylindrische Grundform zulässt. Zu diesem Zweck wird vorgeschlagen, gemäss Fig. 4 und 5 einen Lagerkörper 52 anzuwenden, dessen Aussenform einen Ausschnitt aus dem Winkelkopf 1 darstellt. Demnach ist der Lagerkörper ein quer zur Bohrerachse liegendes, halbkreisförmiges Zylindersegment, welches in eine adäquate Ausnehmung mit Begrenzungsflächen 53, 54 und 55 des Kopfes 1 einsetzbar und dort durch die Klemmwirkung der Schraubhülse 29 zu befestigen ist. Die Befestigung erfolgt wie früher beschrieben durch den Angriff des Innenkegels 33 der Hülse 29 gegen eine kegelige Fase 56 des Lagers 52, und die Anpressung des Lagers ist gegen die Flächen 53 und 54 des Kopfes 1 zu erwarten, wobei gleichzeitig der Lagerkörper zur Achse des Kopfes zentriert wird. Die zentrierende Wirkung ist dadurch möglich, dass der Kegel 56 über den vollen Halbkreis des Lagerkörpers 52 ausgebildet ist und daher von der Schraubhülse 29 zwingend in deren Achslage gezogen wird. Der Lagerkörper 52 ist in Richtung der Schraubhülse 29 etwas länger ausladend als nach den anderen Seiten, wodurch er im Bereich der Kegelfläche 56 verstärkt und in bezug auf die Bohrerachse asymmetrisch wird und zwangsläufig nur noch in dieser Stellung – nicht aber irrtümlich um 180° verdreht – in den Kopf eingesetzt werden kann. Es ist auch nicht mehr notwendig, den Lagerkörper durch einen Stift zu fixieren, wie in Fig. 3 früher beschrieben. Das Werkzeug samt Lager 52 ist in Fig. 4 in Betriebsstellung innerhalb des Kopfes 1 dargestellt. Antrieb und Lagerung sowie Arretierung und Wechsel des Werkzeuges erfolgen sinngemäss gleich wie zu Fig. 1-3 geschildert.

Um die Abnützung der Schraubhülse 29 an deren Hohlkegel 33 zu reduzieren, kann vorteilhafterweise die kopfseitige Mündung dieser Hülse durch einen vorgesetzten Ring 57 aus besonders widerstandsfähigem Werkstoff gebildet werden, der mit der Schraubhülse 29 fest oder drehbeweglich verbunden ist und es gestattet, die Schraubhülse selbst aus Gründen der Gewichtsreduzierung beispielsweise aus Leichtmetall oder ähnlichem Werkstoff herzustellen.

Die Erfindung ist nicht auf die beispielsweise beschriebenen und dargestellten Ausführungsformen beschränkt und lässt weitere Gestaltungen und Verhänderungen zu. So ist es z. B. möglich, bei entsprechender Dimensionierung der Triebzahnräder das im Kopf gelegene Lager des Werkzeugschaftes mit dem werkzeugseitigen Frontlager zu vereinigen, damit in die Baueinheit des Werkzeuges zu integrieren und ebenfalls austauschbar zu gestalten. Weiters können an Stelle von Gleitlagern auch Wälzlager zum Einsatz kommen, es können die Lagerkörper über die Kopffasson vorspringen, oder der Winkelkopf kann grösser sein als das Halsstück der Schraubhülse. Auch ist es möglich, an Lagerstellen oder Verbindungsstellen Dichtungen anzubringen oder beispielsweise innerhalb des Winkelkopfes oder an dessen Aussenfläche Leitungen für die Zufuhr von Kühlmedien anzuordnen. Schliesslich muss der Antrieb des Werkzeuges nicht rotierend sein, sondern es ist auch Drehpendelantrieb möglich, wie er für zahnärztliche Feilwinkelstücke bekannt ist und wo an Stelle von Bohrern verschiedenartige Wurzelkanalfeilen zum Einsatz kommen.

## Patentansprüche

1. Winkelstück für zahnärztliche Zwecke mit einem im Kopfteil (1) quer zur Antriebsachse gelagerten und mit seinem Antriebszahnrad (5) fest verbunden und gemeinsam mit diesem austauschbaren Werkzeug (4) mit zylindrischem Werkzeugschaft (50), dadurch gekennzeichnet, dass ein in den Kopfteil (1) formschlüssig einsetzbares, werkzeugseitiges Kopflager (42) mit dem Werkzeug (4) drehbeweglich und unverlierbar verbunden ist und dass eine auf dem Kopfschaft (2) axial verschiebbare äussere Schraubhülse (29) das Kopflager (42) in dessen eingesetzter Lage teilweise übergreift.

2. Winkelstück nach Anspruch 1, dadurch gekennzeichnet, dass die Mündung der Schraubhülse (29) einen Hohlkegel (33) aufweist, der gegen eine korrespondierende äussere Kegelfläche (49) des Kopflagers (42) pressbar ist.

3. Winkelstück nach einem der Ansprüche 1 oder 2, dadurch gekennzeichnet, dass das Kopflager (42) zylindrische Aussenform hat und die äussere Kegelfläche (49) am Übergang der werkzeugseitigen Stirnfläche (48) zur zylindrischen Mantelfläche (42) angeordnet ist.

4. Winkelstück nach einem der Ansprüche 1 bis 3, dadurch gekennzeichnet, dass das Kopflager (42) in Einbaustellung durch Formschluss, z. B. mittels eines im Kopfteil (1) sitzenden Stiftes (39), der in einen Schlitz (47) des Kopflagers eingreift, gegen Verdrehung gesichert ist.

5. Winkelstück nach einem der Ansprüche 1 oder 2, dadurch gekennzeichnet, dass das Kopflager (52) in seiner äusseren Form ein Segment des Kopfteiles (1) ist und die äussere Kegelfläche (56) an der der Schraubhülse (29) zugekehrten Stirnfläche des Segmentes angeordnet ist.

6. Winkelstück nach einem der Ansprüche 1 bis 5, dadurch gekennzeichnet, dass die Schraubhülse (29) an ihrem dem Kopfteil (1) abgekehrten Ende kegelig vergrössert und als Drehgriff (31) ausgebildet ist.

7. Winkelstück nach einem der Ansprüche 1 bis 6, dadurch gekennzeichnet, dass der Kopfteil (1) mit dem Kopfschaft (2) und die Schraubhülse (29) mit einem Basisteil (11) verbunden sind, wobei der Basisteil (11) in den Griffteil (3) einschraubbar ist.

8. Winkelstück nach einem der Ansprüche 1 bis 7, dadurch gekennzeichnet, dass der Aussendurchmesser des Kopfteiles (1) und der Aussendurchmesser des an den Kopfteil anschliessenden Abschnittes (32) der Schraubhülse (29) gleich gross sind.

## Claims

1. A bent for dentists, comprising a tool (4), which has a cylindrical shank (50) and which is mounted in the head part (1) transversely of the drive shaft, and is rigidly connected to, and replaceable together with, its drive gearwheel (5), characterised in that a head bearing (42) which is disposed on the tool side and which is positively insertable into the head part (1) is connected to the tool (4) so as to rotate therewith and be non-detachable therefrom, and an outer screw bush (29) axially slidable on the head shank (2) partially engages over the head bearing (42) when the latter is in the inserted position.

2. A bent part according to Claim 1, characterised in that the orifice of the screw bush (29) has a hollow cone (33) which is pressable against a corresponding outer conical surface (49) of the head bearing (42).

3. A bent part according to Claim 1 or 2, characterised in that the head bearing (42) has a cylindrical external shape and the outer conical surface (49) is disposed at the transition between the end face (48) on the tool side and the cylindrical outer surface (42).

4. A bent part according to any one of Claims 1 to 3, characterised in that the head bearing (42) is secured against turning in the fitted position by a positive fit, e.g. by means of a pin (39) which is mounted in the head part (1) and which engages in a slot (47) in the head bearing.

5. A bent part according to Claim 1 or 2, characterised in that the head bearing (52) in its external shape is a segment of the head part (1) and the outer conical surface (56) is disposed on the segment end face facing the screw bush (29).

6. A bent part according to any one of Claims 1 to 5, characterised in that the screw bush (29) is conically enlarged and formed as a handle (31) at its end remote from the head part (1).

7. A bent part according to any one of Claims 1 to 6, characterised in that the head part (1) is connected to the head shank (2) and the screw bush (29) is connected to a base part (11), the latter being screwable into the handle part (3).

8. A bent part according to any one of Claims 1 to 7, characterised in that the outside diameter of the head part (1) and the outside diameter of the portion (32) of the screw bush (29) adjoining the head part are identical.

## Revendications

1. Pièce d'angle pour l'art dentaire, comportant une fraise (4) portée dans la tête (1), transversalement par rapport à l'axe d'entraînement, solidarisée avec son pignon d'entraînement (5), pouvant être échangé en commun avec lui et présentant une queue de fraise cylindrique (50), caractérisée en ce qu'une douille (42) de la tête, que l'on peut insérer de par la forme dans la tête (1) côté fraise, est reliée à la fraise (4) avec possibilité de rotation et de façon imperdable, et en ce qu'un manchon vissé extérieur (29), qui peut coulisser axialement sur le fût de la tête (2), recouvre partiellement la douille (42) de la tête dans la position d'insertion de cette douille.

2. Pièce d'angle selon la revendication 1, caractérisée en ce que l'embouchure du manchon vissé (29) présente un cône creux (33) que l'on peut appuyer contre une surface conique extérieure correspondante (49) de la douille (42) de la tête.

3. Pièce d'angle selon l'une des revendications 1 ou 2, caractérisée en ce que la douille (42) de la tête a une forme extérieure cylindrique, et en ce que la surface conique extérieure (49) est disposée à la transition entre la surface frontale (48) côté fraise et la surface latérale cylindrique (42).

4. Pièce d'angle selon l'une des revendications 1 à 3, caractérisée en ce que la douille (42) de la tête est garantie à l'égard d'une rotation, en position montée, par une liaison de par la forme, par exemple au moyen d'une goupille (39) portant dans la tête (1) et se logeant dans une rainure (47) de la douille de la tête.

5. Pièce d'angle selon l'une des revendications 1 ou 2, caractérisée en ce que la douille (52) de la tête est, du point de vue de sa forme extérieure, un segment de la tête (1), et en ce que la surface conique extérieure (56) est disposée contre la surface frontale, côté du manchon vissé (29), du segment.

6. Pièce d'angle selon l'une des revendications 1 à 5, caractérisée en ce que le manchon vissé (29) est renforcé en cône à son extrémité opposée à la tête (1), et en ce qu'il est conçu sous la forme d'un manche tournant (31).

7. Pièce d'angle selon l'une des revendications 1 à 6, caractérisée en ce que la tête (1) est reliée au fût de la tête (2) et le manchon vissé (29) à une pièce de base (11), la pièce de base (11) pouvant se visser dans la poignée (3).

8. Pièce d'angle selon l'une des revendications 1 à 7, caractérisée en ce que le diamètre extérieur de la tête (1) et le diamètre extérieur du tronçon (32) du manchon vissé (29) qui jouxte la tête sont de même dimension.

FIG.1

FIG.3

FIG.2

7

FIG.4

FIG.5